# DEMANDE DE BREVET EUROPEEN

(11) **EP 1 969 926 A1**
(43) Date de publication de la demande: **17.09.2008**
(21) Numéro de dépôt: 08004639.4
(22) Date de dépôt: 13.03.2008
(51) Int. Cl.: A01K 63/00

(54) **Aquarium pliant à structure renforcée**

(30) Priorité: 16.03.2007 FR 0701924
(71) Demandeur: CCRG SARL, 92120 Montrouge (FR)
(72) Inventeur: Boselli, Daniel, 75007 Paris (FR)
(74) Mandataire: Lemoyne, Didier

(57) **Abrégé**

Aquarium destiné notamment à l'élevage des poissons d'agrément, du type constitué par une enceinte étanche (1), repliée sur elle-même dans un même plan, en vue de son transport, et qui est formé partiellement par une bâche imperméable souple (2) associée avec deux parois frontales transparentes et rigides (3,4), pour définir un volume parallélépipédique lors d'un déploiement en vue d'une utilisation, caractérisé en ce qu'il comporte des moyens (8) de reprise des forces engendrées par la pression de l'eau sur les deux parois frontales (3,4), indépendamment des parties latérales de la bâche souple (2) qui leur sont solidaires afin qu'elles ne jouent qu'un rôle d'étanchéité, tout en permettant le repliage de l'aquarium,

## Description

La présente invention concerne un aquarium, plus particulièrement, mais non exclusivement, destiné à l'élevage des poissons d'agrément.

Les aquariums connus de ce type sont de manière classique, constitués d'une structure destinée à être remplie d'eau, formant une carcasse rigide ouverte à sa partie supérieure et dont ses parois latérales sont aptes à supporter la pression de l'eau et coopèrent avec des moyens d'étanchéité pour définir une enceinte aquatique étanche.

Les parois latérales de ces aquariums sont transparentes et sont réalisées en verre ou en résine synthétique.

Les avantages de cette matière sont de pouvoir résister aux chocs, de permettre la réalisation d'une structure légère et également de pouvoir assurer aisément le collage des parois entre elles ou sur un châssis correspondant aux arêtes de la carcasse, pour l'obtention d'une enceinte aquatique étanche, par interposition ou non de mastic.

Par contre, l'inconvénient de la résine synthétique réside dans le fait de sa faible résistance à l'abrasion, ce qui lui donne une certaine opacité après un temps d'utilisation. De plus, elle est sensible aux rayures.

Pour ces dernières raisons, il est souvent préféré le verre, mais d'autres inconvénients se posent alors qui sont principalement le poids, la fragilité et la mise en oeuvre des moyens d'étanchéité.

En ce qui concerne le poids, le problème se pose surtout dans les aquariums de grandes dimensions qui nécessitent des supports d'une planéité parfaite, de manière à éviter le vrillage de la structure, voire la cassure des vitres.

De plus, le poids associé à la fragilité des parois en verre et à l'encombrement global de ces aquariums pose également des problèmes de stockage, d'expédition et de manutention.

Dans de telles réalisations et pour éviter ces divers inconvénients, notamment celui de l'encombrement, et faciliter ainsi la vente par correspondance par exemple, le demandeur a d'abord imaginé de rendre la structure démontable, de manière à pouvoir la stocker ou l'expédier en pièces détachées dans un colis d'encombrement minimum, une notice de montage jointe permettant l'assemblage de la structure par l'utilisateur.

La principale difficulté rencontrée dans la réalisation d'un aquarium selon ce principe concerne les moyens d'étanchéité à mettre en oeuvre par l'utilisateur qui sont d'un maniement délicat lorsqu'il s'agit de colle spéciale en présence du verre ou de manipulation d'un mastic.

C'est ainsi que le demandeur a déjà proposé une solution qui a fait déjà l'objet du brevet d'invention français N° 91 08748 et qui a pour objet de remédier à tous les inconvénients précités, tout en lui conférant une étanchéité parfaite et un agrément visuel inaltérable.

Pour ce faire, l'aquarium décrit dans ce brevet est constitué d'une structure destinée à être remplie d'eau et qui est formée d'une carcasse rigide ouverte à sa partie supérieure, et dont ses parois latérales sont aptes à supporter la pression de l'eau et coopèrent avec des moyens d'étanchéité pour définir une enceinte aquatique étanche, réalisée indépendamment de la carcasse rigide et constituée au moins partiellement par une bâche imperméable souple, amovible, repliable sur elle-même sur un même plan et dont la forme déployée correspond sensiblement à celle eu volume interne de la carcasse rigide, qui n'a qu'un rôle de support, dans lequel est logée la bâche de l'aquarium, la pression d'eau lors de son introduction assurant le plaquage de ladite bâche contre les parois latérales de la carcasse, ladite bâche comportant une paroi latérale de façade située en vis-à-vis d'une paroi de façade de la carcasse et qui est constituée d'un matériau transparent rigide.

Si cette solution a remédié à bon nombre d'inconvénients, il n'en reste pas moins vrai que l'enceinte aquatique étanche repliable sur elle-même lors d'une non utilisation et déployable lors d'une utilisation, reste tributaire d'une carcasse rigide avec laquelle elle doit coopérer nécessairement pour le maintien des trois autres parois latérales et du fond de l'enceinte aquatique formant bâche.

Le demandeur a également remédié à cet inconvénient en proposant une autre solution décrite dans le brevet français N° 97 08501, dont la caractéristique essentielle consiste en une enceinte étanche formée par deux parois frontales quadrangulaires, transparentes et rigides, situées en vis-à-vis pour définir une face avant et une face arrière dudit aquarium, lesquelles faces sont reliées entre elles par des panneaux souples d'extrémités latérales et de fond constitués par la bâche, de manière à permettre la mise en forme de ladite enceinte et à la rendre autoporteuse par la seule pression de l'eau sur ses parois lors de sa mise en service.

Cette solution, qui a remédié à l'inconvénient précédent, a néanmoins révélé à l'usage un autre inconvénient qui tient au fait de créer des onglets latéraux sur les côtés longitudinaux du développé en trois parties constituant la bâche souple, une partie de fond et deux parties latérales, afin d'améliorer le collage, du fait que ce sont ces parties latérales qui assurent la reprise des forces engendrées par la pression de l'eau, s'appliquant sur les parois frontales transparentes et rigides.

Selon ce même brevet, il était décrit que des moyens de raccordement étaient interposés entre les parois frontales et les bords de la bâche, ces moyens étant constitués par une cornière en L se prolongeant par une section en U formant des glissières verticales dans lesquelles étaient insérés des panneaux latéraux de rigidification, de manière à faire obstacle à la déformation de la bâche lorsque celle-ci était sollicitée par la pression de l'eau.

Ces plaques de rigidification étant insérées librement dans les glissières formées par les cornières d'angle, on comprend bien qu'elles ne pouvaient pas s'opposer à l'étirement des parties latérales de ladite bâche, d'où la nécessité de devoir renforcer leur collage en créant les onglets précités, ce qui n'empêchera pas à terme de risquer d'obtenir un aquarium d'un aspect disgracieux de par la déformation de l'ensemble.

La présente invention a pour but de remédier à ces inconvénients et concerne à cet effet un aquarium destiné notamment à l'élevage des poissons d'agrément, du type constitué par une enceinte étanche, repliée sur elle-même dans un même plan, en vue de son transport, et qui est formé partiellement par une bâche imperméable souple associée avec deux parois frontales transparentes et rigides, pour définir un volume parallélépipédique lors d'un déploiement en vue d'une utilisation, caractérisé en ce qu'il comporte des moyens de reprise des forces engendrées par la pression de l'eau sur les deux parois frontales, indépendamment des parties latérales de la bâche souple qui leur sont solidaires afin qu'elles ne jouent qu'un rôle d'étanchéité, tout en permettant le repliage de l'aquarium.

C'est ainsi qu'ont été séparés les problèmes de l'étanchéité et du maintien des forces, l'étanchéité étant toujours faite par la bâche souple et le maintien des forces par une structure rigide venant s'accrocher sur les parois frontales sur lesquelles sont fixés les systèmes permettant un montage simple.

Ainsi le choix de la bâche est plus vaste puisque la résistance à l'étirement n'est plus un critère de choix, d'où la possibilité d'utiliser des bâches plus fines et de qualité moins coûteuse.

Comme nous le verrons dans la description qui va suivre, le collage de la bâche sur les parois frontales se fera dorénavant uniquement sur leur chant, et la forme simple de la bâche utilisée réduira le coût de fabrication de l'aquarium.

D'autres caractéristiques de l'invention ressortiront au cours de la description qui va suivre et devront être considérées isolément ou selon toutes leurs combinaisons techniques possibles.

Cette description, qui sera donnée à titre d'exemple non limitatif, fera mieux comprendre comment l'invention peut être réalisée en référence aux dessins annexés sur lesquels :
La figure 1 est une vue en perspective d'un aquarium selon l'invention, partiellement représenté.
La figure 2 est une vue développée d'une bâche souple constituant deux côtés latéraux d'extrémité et un fond, à associer à deux parois frontales transparentes et rigides, ainsi qu'aux moyens de reprise de forces, objet de l'invention.
La figure 3 est une vue de dessus de l'aquarium selon le mode de réalisation de la figure 1, à partir des éléments représentés sur la figure 2.
La figure 4 est une vue de dessus d'un aquarium comportant des moyens de reprise de forces selon une variante de réalisation de l'invention.
La figure 5 est une vue en perspective éclatée à échelle agrandie des moyens de reprise de forces selon le mode de réalisation de la figure 4.

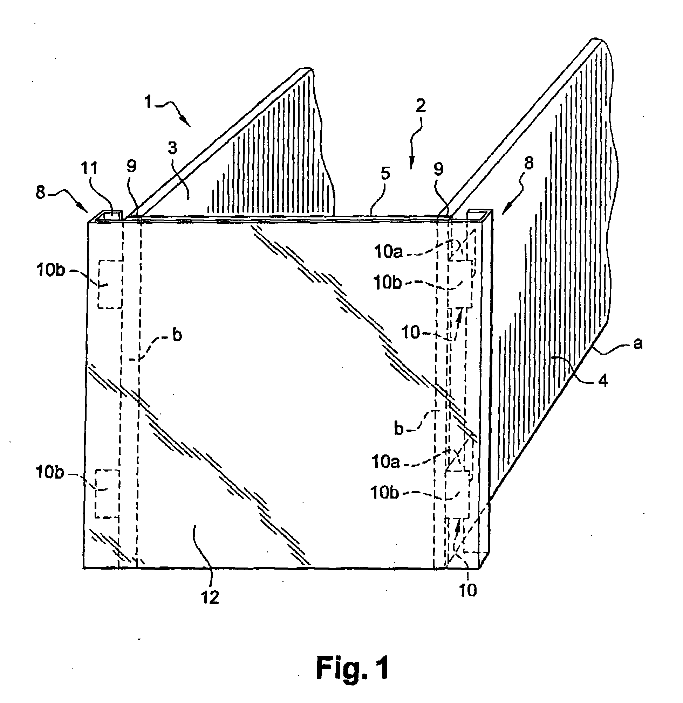

Tel que représenté à la figure 1, l'aquarium selon l'invention est constitué par une enceinte étanche 1 repliable sur elle-même dans un même plan en vue de son transport.

Elle est formée par une bâche imperméable souple 2, associée à deux parois frontales 3 et 4, quadrangulaires, transparentes et rigides, situées en vis-à-vis pour définir la face avant et la face arrière dudit aquarium.

Lesdites faces 3 et 4 sont reliées entre elles par des panneaux souples d'extrémités latérales 5 et 6 et de fond 7, constitués par la bâche 2.

De cette manière, l'enceinte étanche 1 est mise en forme et elle est rendue autoporteuse par la seule pression de l'eau sur ses parois 3, 4, 5, 6, 7 lors de sa mise en service.

La partie d'aquarium formant la bâche 2 est obtenue par découpe d'un flan d'un matériau imperméable souple pour réaliser un développé rectangulaire définissant trois parties attenantes 5, 7, 6 en prolongement les unes des autres, et constituant successivement un premier panneau d'extrémités latérales 5, un panneau de fond 7 et un second panneau d'extrémités latérales 6.

Selon l'invention, l'aquarium comporte des moyens 8 de reprise des forces engendrées par la pression de l'eau sur les deux parois frontales 3,4, indépendamment des parties latérales 5,6 de la bâche souple 2 qui leur sont solidaires afin qu'elles ne jouent qu'un rôle d'étanchéité, tout en permettant le repliage de l'aquarium.

Ces moyens de reprise des forces sont constitués par une structure rigide venant s'accrocher sur les parois frontales 3,4, directement ou indirectement.

Selon une autre caractéristique de l'invention, les parties latérales 5,6 de la bâche 2 et son fond 7 sont solidarisés des deux parois frontales 3,4, par interposition d'une colle appropriée 9, uniquement entre des zones longitudinales du développé de la bâche 2 et les trois chants correspondants 'a', 'b', 'c' de chaque paroi frontale 3,4.

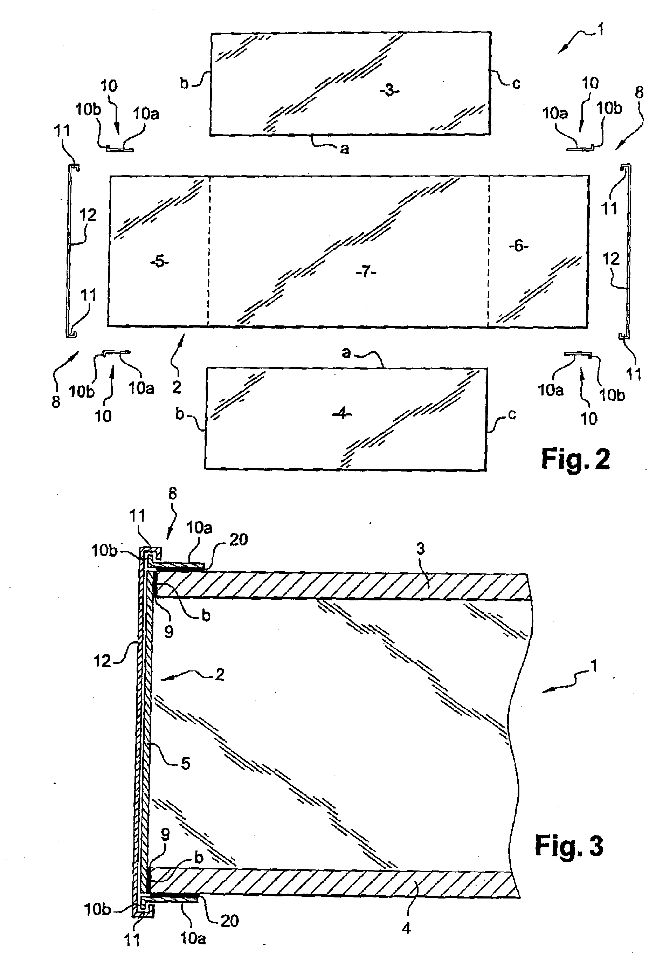

Selon le premier exemple de réalisation représenté sur les figures 1, 2 et 3, la structure rigide constituant les moyens 8 de reprise des forces comprend au moins quatre pièces 10 repliées en équerre, dont un de leurs côtés 10a respectifs est rapporté par collage 20 sur chacune des parois frontales 3,4, côté extérieur, à proximité de leurs chants verticaux 'b', et dont leur autre côté 10b, perpendiculaire, est tourné vers l'extérieur afin de réaliser, deux par deux avec un côté 10b correspondant opposé, deux nervures parallèles entre elles, destinées à coopérer en glissement au montage avec deux rainures correspondantes 11 en U, réalisées en vis-à-vis aux extrémités verticales d'une plaque latérale 12 rigide, à rapporter sur un côté de l'aquarium, une autre plaque latérale rigide 12 identique étant rapportée de la même manière, sur le côté opposé de l'aquarium.

Il est à noter que cette plaque latérale pourrait être obtenue par usinage, de bois par exemple, par pliage d'une tôle métallique, ou encore par moulage d'une matière plastique.

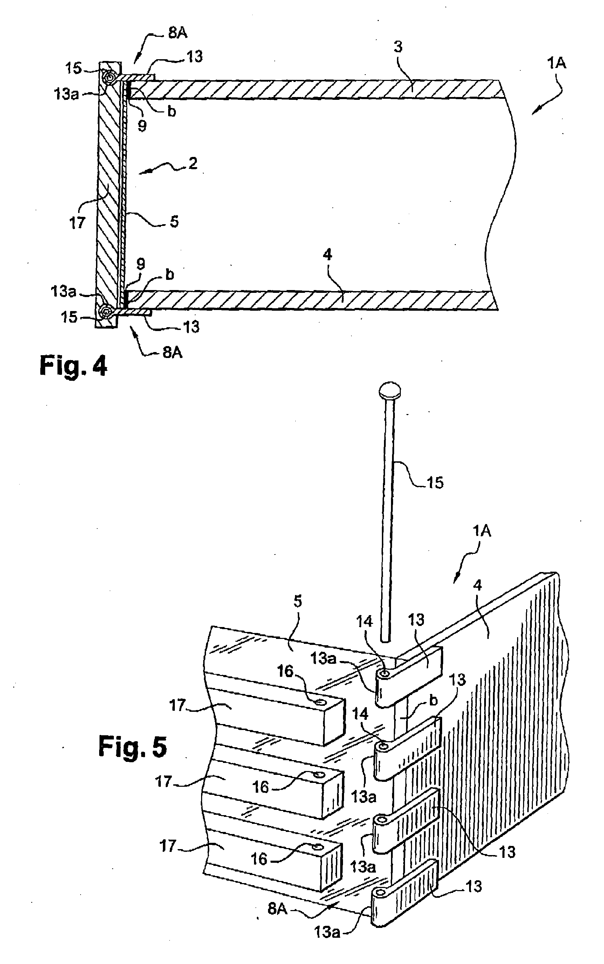

Selon une variante de réalisation représentée sur les figures 4 et 5, la structure rigide constituant les moyens de reprise 8A comprend une pluralité de pattes 13 rapportées par collage sur les parois frontales 3,4, côté extérieur à proximité de leurs chants verticaux 'b', chacune de ses pattes 13 comportant une partie 13a, dépassant par rapport auxdits chants 'b' et étant percée d'un trou vertical 14, dans l'alignement les uns des autres, afin de permettre l'introduction d'une tige de liaison 15 coopérant au montage, également avec des trous 16 réalisés perpendiculairement sur des éléments longilignes intercalaires 17, constituant de part et d'autre de l'aquarium ses plaques latérales rigides.

Selon une variante de l'exemple de réalisation précédent, les pattes 13 sont solidaires entre elles et sont issues d'un élément unique présentant une partie commune destinée à être rapportée par collage sur les parois frontales 3,4, côté extérieur, à proximité de leurs chants verticaux 'b', les pattes 13 dépassant de ceux-ci.

Selon les deux cas qui viennent d'être cités, les éléments longilignes intercalaires 17 pourraient être constitués par des tasseaux en bois.

La bâche 2 peut être réalisée dans une toile souple en polyamide, résistante à l'arrachement et enduite sur deux faces de polychlorure de vinyle lui conférant une étanchéité, opaque ou transparente, puis recevant un vernis acrylique lui conférant une protection aux agressions chimiques, plus particulièrement basiques.

Préférentiellement, la bâche 2 est réalisée dans un matériau souple et étanche, chimiquement neutre au contact de l'eau.

Il pourra s'agir d'une matière plastique ou encore d'un élastomère.

Par contre, les parois frontales avant 3 et arrière 4 rigides et transparentes sont réalisées en verre.

## Revendications

1. Aquarium destiné notamment à l'élevage des poissons d'agrément, du type constitué par une enceinte étanche (1), repliée sur elle-même dans un même plan, en vue de son transport, et qui est formé partiellement par une bâche imperméable souple (2) associée avec deux parois frontales transparentes et rigides (3,4), pour définir un volume parallélépipédique lors d'un déploiement en vue d'une utilisation, ledit aquarium comportant des moyens (8) de reprise des forces engendrées par la pression de l'eau sur les deux parois frontales (3,4), constitués par une structure rigide venant s'accrocher sur les parois frontales (3,4), directement ou indirectement, **caractérisé en ce que** les parties latérales (5,6) de la bâche (2) et son fond (7) sont solidarisés des deux parois frontales (3,4), par interposition d'une colle appropriée (9), uniquement entre des zones longitudinales du développé de la bâche (2) et les trois chants correspondants (a,b,c) de chaque paroi frontale (3,4).

2. Aquarium selon la revendication 1, **caractérisé en ce que** la structure rigide constituant les moyens (8) de reprise des forces comprend au moins quatre pièces (10) repliées en équerre, dont un de leurs côtés (10a) respectifs est rapporté par collage sur chacune des parois frontales (3,4), côté extérieur, à proximité de leurs chants verticaux (b), et dont leur autre côté (10b), perpendiculaire, est tourné vers l'extérieur afin de réaliser, deux par deux avec un côté (10b) correspondant opposé, deux nervures parallèles entre elles, destinées à coopérer en glissement au montage avec deux rainures correspondantes (11) en U, réalisées en vis-à-vis aux extrémités verticales d'une plaque latérale (12) rigide, à rapporter sur un côté de l'aquarium, une autre plaque latérale rigide (12) identique étant rapportée de la même manière, sur le côté opposé de l'aquarium, de manière à ce que lesdites plaques (12) puissent être insérées librement dans les rainures (11).

3. Aquarium destiné notamment à l'élevage des poissons d'agrément, du type constitué par une enceinte étanche (1), repliée sur elle-même dans un même plan, en vue de son transport, et qui est formé partiellement par une bâche imperméable souple (2) associée avec deux parois frontales transparentes et rigides (3,4), pour définir un volume parallélépipédique lors d'un déploiement en vue d'une utilisation, ledit aquarium comportant des moyens (8) de reprise des forces engendrées par la pression de l'eau sur les deux parois frontales (3,4), constitués par une structure rigide venant s'accrocher sur les parois frontales (3,4), directement ou indirectement, **caractérisé en ce que** la structure rigide constituant les moyens de reprise (8A) comprend une pluralité de pattes (13) rapportées par collage sur les parois frontales (3,4), côté extérieur à proximité de leurs chants verticaux (b), chacune de ses pattes (13) comportant une partie (13a), dépassant par rapport auxdits chants (b) et étant percée d'un trou vertical (14), dans l'alignement les uns des autres, afin de permettre l'introduction d'une tige de liaison (15) coopérant au montage, également avec des trous (16) réalisés perpendiculairement sur des éléments longilignes intercalaires (17), constituant de part et d'autre de l'aquarium ses plaques latérales rigides.

4. Aquarium selon la revendication 3, **caractérisé en ce que** les pattes (13) sont solidaires entre elles et sont issues d'un élément unique présentant une partie commune destinée à être rapportée par collage sur les parois frontales (3,4), côté extérieur, à proximité de leurs chants verticaux (b), les pattes (13) dépassant de ceux-ci.

5. Aquarium selon l'une des revendications 1 à 4, **caractérisé en ce que** la bâche (2) est réalisée dans une toile souple en polyamide, résistante à l'arrachement et enduite sur deux faces de polychlorure de vinyle lui conférant une étanchéité, opaque ou transparente, puis recevant un vernis acrylique lui conférant une protection aux agressions chimiques, plus particulièrement basiques.

6. Aquarium selon l'une des revendications 1 à 5, **caractérisé en ce que** la bâche (2) est réalisée dans un matériau souple et étanche, chimiquement neutre au contact de l'eau.

7. Aquarium selon l'une des revendications 1 à 6, **caractérisé en ce que** les parois frontales avant (3) et arrière (4) rigides et transparentes sont réalisées en verre.
